# EUROPEAN PATENT APPLICATION

(11) **EP 3 068 073 A1**
(43) Date of publication of application: **14.09.2016**
(21) Application number: 16160029.1
(22) Date of filing: 11.03.2016
(51) Int. Cl.: H04L 12/18

(54) **CONFERENCE SUPPORT APPARATUS, CONFERENCE SUPPORT SYSTEM, CONFERENCE SUPPORT PROGRAM, AND CONFERENCE SUPPORT METHOD**

(30) Priority: 12.03.2015 JP 2015049734
(71) Applicant: Konica Minolta, Inc., Tokyo 100-7015 (JP)
(72) Inventor: Takeuchi, Kazuma, Tokyo, 100-7015 (JP); Ogino, Shinya, Tokyo, 100-7015 (JP); Takamura, Shunsuke, Tokyo, 100-7015 (JP); Hosaka, Kenta, Tokyo, 100-7015 (JP); Fukumura, Yuri, Tokyo, 100-7015 (JP)
(74) Representative: Henkel, Breuer & Partner

(57) **Abstract**

A conference support apparatus includes a controller connected communicably to a display and an operation acceptor, wherein the controller manages an individual work region applicable to a display region of each of terminal apparatuses; analyzes an operation performed by user via the operation acceptor; causes each display to display a screen in which an object operation in each of the individual work regions of the terminal apparatuses is reflected; predicts a target object for operation based on the result of analysis; and suppresses an operation of the predicted target object in a specific terminal apparatus including the predicted target object in the individual work region, the specific terminal apparatus being a terminal apparatus other than a terminal apparatus whose object has been predicted as the target object according to the operation therein, among the terminal apparatuses.

## Description

### BACKGROUND OF THE INVENTION

### 1. Technological Field

The present invention relates to a conference support apparatus, a conference support system, a conference support program, and a conference support method.

### 2. Background

In recent years, conference support apparatuses have been proposed in which an electronic blackboard provided with a touch panel or the like is used to store screen transition in accordance with user operation and to manage the flow of the conference in a time-series manner (see, e.g., Japanese Patent Applications Laid-Open No. 2003-339033 and No. 2010-176216). The conference support apparatuses manage the flow of the conference in a time-series manner and thus can reproduce the state of the screen at an arbitrary time point.

In general, a plurality of terminal apparatuses each having a display section and an operation section are connected to the conference support apparatus through a network such as the Internet and a wireless/wired LAN (Local Area Network). Hereinafter, a system in which a plurality of terminal apparatuses are connected communicably to the conference support apparatus is referred to as a "conference support system." Note that, there may be a case where one of the terminal apparatuses serves as the conference support apparatus.

In such a conference support system, the conference support apparatus manages a cooperative work region in the conference support system. In the plurality of terminal apparatuses, the cooperative work region is partially or entirely displayed on the respective display sections as individual work regions, and work is performed on each of the individual work regions.

In such a conference support system, the users can perform, by operating his or her terminal apparatus, various object operations such as moving, expanding and contracting with respect to various objects including text boxes in which to input letters and marks, and diagrams, for example. The object to be operated by the object operation (hereinafter, such an object is referred to as "target object for operation for operation") is selected by touch operation or enclosing operation, for example. The touch operation is an operation to directly select an object and includes an operation to touch the touch panel with a finger or stylus (including a multi-touch operation) and a mouse clicking operation. The enclosing operation is the operation to select objects within an enclosed region at once and includes an operation to slide a finger or stylus on the touch panel and a mouse drag operation on the touch panel.

In a case where the operation section is formed by a large screen touch panel such as an electronic blackboard and object operations are to be performed on this touch panel, it is easy to know whether a touch panel operation or enclosing operation is to be performed, i.e., it is easy to know the target object for operation based on the position or eyesight of the user. Thus, it is unlikely that object operations for the same object or group are performed almost simultaneously. Hereinafter, the following object operations are referred to as "conflicting operation:" a plurality of object operations for the same object or group to be performed although they are not allowed to be performed simultaneously; and a certain object operation and another object operation to be performed for an object or group that is to be a target for the certain object operation when the other object operation is performed before a screen based on the certain object operation is not reflected on the display section yet, or another object operation to be performed for the object or group that is a target for the certain object operation, while the certain object operation is performed for the object or group.

In a case where the users participate in a conference at various locations and perform object operations on the respective terminal apparatuses, it is difficult for each user to know the behavior of the other users, so that a conflicting operation is likely to occur. In this case, when the individual work regions on a plurality of terminal apparatuses overlap each other, the users may be mutually notified of the individual work regions, but such an attempt ends up notifying the users that a conflicting operation may occur. In other words, each user cannot know an object operation that is performed on another terminal apparatus, until an object selection operation such as a touch operation or an enclosing operation, for example, is updated (until the selected state of object is displayed) on the display section of his or her own terminal apparatus. For this reason, this attempt is not sufficient as a solution for conflicting operations.

### SUMMARY OF THE INVENTION

An object of the present invention is to provide a conference support apparatus, a conference support system, a conference support program, and a conference support method which can improve efficiency of a conference by predicting an object operation to be performed on a certain terminal apparatus and allowing another terminal apparatus to know the result of prediction to avoid occurrence of a conflicting operation.

To achieve the abovementioned object, a conference support apparatus reflecting one aspect of the present invention is used in a conference support system in which a plurality of terminal apparatuses configured to perform work on a cooperative operation region are communicably connected to each other, each of the terminal apparatuses including: a display which displays an object; and an operation acceptor which accepts an operation of the object by a user, the conference support apparatus including a controller connected communicably to the display and the operation acceptor, the controller including at least a microprocessor, wherein the controller manages an individual work region that is applicable to a display region of each of the plurality of terminal apparatuses, analyzes an operation performed by a user via the operation acceptor, causes each of the displays to display a screen in which an object operation in each of the individual work regions is reflected, predicts a target object for operation based on a result of the analysis, and suppresses an operation of the predicted target object in a specific terminal apparatus that includes the predicted target object in the individual work region, the specific terminal apparatus being a terminal apparatus other than a terminal apparatus whose object has been predicted as the target object according to the operation thereon, among the plurality of terminal apparatuses.

A conference support system reflecting one aspect of the present invention includes: the conference support apparatus according to the aspect of the present invention mentioned above; and a terminal apparatus having at least one of the display and the operation acceptor, and communicably connected to the conference support apparatus.

A conference support program reflecting one aspect of the present invention is configured to cause a computer of a conference support apparatus to execute processing, the conference support apparatus being used in a conference support system in which a plurality of terminal apparatuses configured to perform work on a cooperative operation region are communicably connected to each other, each of the terminal apparatuses including: a display which displays an object; and an operation acceptor used to operate the object by a user, the processing including: managing an individual work region that is applicable to a display region of each of the plurality of terminal apparatuses, analyzing an operation performed by a user via the operation acceptor, causing each of the displays to display a screen in which an object operation in each of the individual work regions is reflected, predicting a target object that is a target for the object operation based on a result of the analysis, and suppressing an operation of the predicted target object in a specific terminal apparatus that includes the predicted target object in the individual work region, the specific terminal apparatus being a terminal apparatus other than a terminal apparatus on whose object has been predicted as the target object according to the operation thereon, among the plurality of terminal apparatuses.

A conference support method reflecting one aspect of the present invention is a conference support method in a conference support system in which a plurality of terminal apparatuses configured to perform work on a cooperative operation region are communicably connected to each other, each of the terminal apparatuses including: a display which displays an object; and an operation acceptor used to operate the object by a user, the method including: managing an individual work region that is applicable to a display region of each of the plurality of terminal apparatuses, analyzing an operation performed by a user via the operation acceptor, causing each of the displays to display a screen in which an object operation in each of the individual work regions is reflected, predicting a target object for operation based on a result of the analysis, and suppressing an operation of the predicted target object in a specific terminal apparatus that includes the predicted target object in the individual work region, the specific terminal apparatus being a terminal apparatus other than a terminal apparatus whose object has been predicted as the target object according to the operation thereon, among the plurality of terminal apparatuses.

### BRIEF DESCRIPTION OF DRAWINGS

The advantages and features provided by one or more embodiments of the invention will become more fully understood from the detailed description given hereinbelow and the appended drawings which are given by way of illustration only, and thus are not intended as a definition of the limits of the present invention, and wherein:
FIG. 1 illustrates a schematic configuration of a conference support system according to an embodiment of the present invention;
FIG. 2 is a block diagram illustrating a hardware configuration of the conference support system;
FIG. 3 is a functional block diagram illustrating a function of a control section of the conference support apparatus;
FIG. 4 illustrates an exemplary object information table;
FIG. 5 illustrates an exemplary screen transition information table;
FIG. 6 illustrates a timeline corresponding to the screen transition information table illustrated in FIG. 5;
FIG. 7 illustrates an exemplary individual work region table;
FIG. 8 illustrates an example of how objects are disposed in individual work regions;
FIG. 9 is a flowchart of an example of conference support processing;
FIG. 10 is a flowchart forming a part of the conference support processing illustrated in FIG 9;
FIGS. 11A to 11C illustrate an example of displaying an individual work region when a touch operation is performed;
FIGS. 12A to 12C illustrate an example of displaying an individual work region when an enclosing operation is completed;
FIGS. 13A to 13C illustrate an example of displaying an individual work region when an enclosing operation is completed;
FIGS. 14A to 14C illustrate an example of displaying an individual work region when an enclosing operation is completed and the object selected state is set; and
FIGS. 15A to 15C illustrates an example of displaying an individual work region when an enclosing operation is in progress.

### DESCRIPTION OF THE PREFERRED EMBODIMENTS

Hereinafter, an embodiment of the present invention will be described with reference to the drawings. However, the scope of the invention is not limited to the illustrated examples.

In the following, an embodiment of the present invention is described in detail with reference to the drawings.

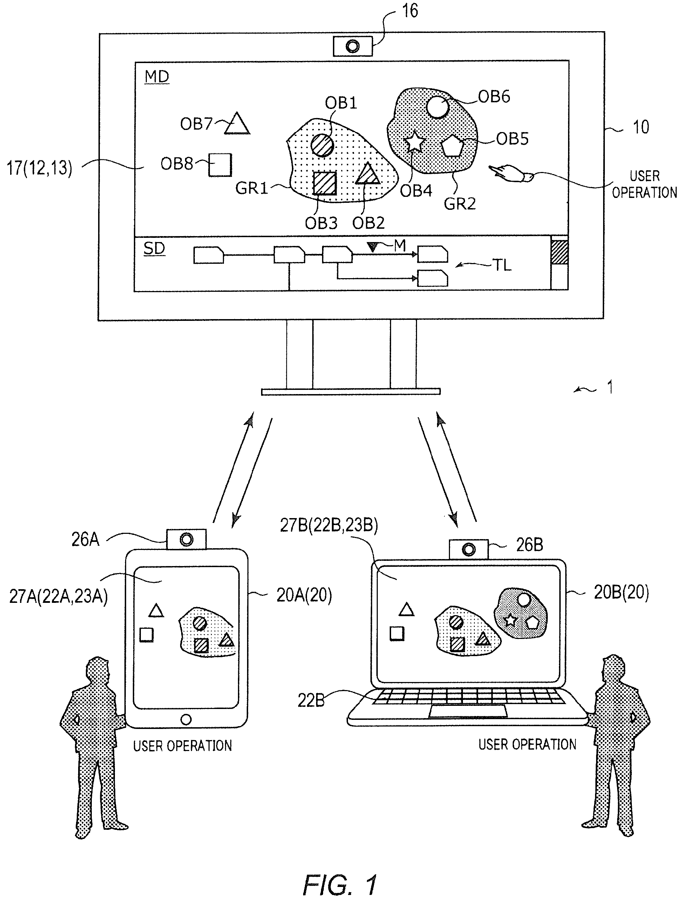

FIG. 1 illustrates a schematic configuration of conference support system 1 according to an embodiment of the present invention.

As illustrated in FIG. 1, conference support system 1 includes conference support apparatus 10 and terminal apparatuses 20. Conference support apparatus 10 and terminal apparatuses 20 are communicatively connected together through a network such as a wired/wireless LAN.

Conference support apparatus 10 is composed of an electronic whiteboard, a projector, a server apparatus, a personal computer, or a mobile terminal (such as a smartphone, tablet terminal or notebook computer), for example. In the present embodiment, a description will be given of an exemplary case where an electronic whiteboard that functions as a display section and an operation section of conference support system 1 is adopted as conference support apparatus 10. Note that, the display section and the operation section of conference support system 1 may not be included in conference support apparatus 10 as long as they are communicatively connected to conference support apparatus 10.

Terminal apparatus 20 is composed of a mobile terminal such as a smartphone, tablet terminal, or notebook computer, or a desktop computer or the like. Terminal apparatus 20 functions as the display section or the operation section of conference support system 1. FIG. 1 illustrates, as terminal apparatuses 20, tablet terminal 20A and notebook computer 20B that function as the display section and the operation section of conference support system 1. Hereinafter, when the component elements of terminal apparatuses 20A and 20B are to be distinguished from each other, the component elements are denoted with symbols added to the reference numerals such as 21 A, 21B, 22A, 22B, and so forth, and when the component elements of terminal apparatuses 20A and 20B are not to be distinguished from each other, the component elements are denoted by reference numerals such as 21, 22, and so forth.

As described above, conference support system 1 is composed of a plurality of terminal apparatuses (conference support apparatus 10, and terminal apparatuses 20A and 20B) each of which includes a display section for displaying an object and an operation section for operating an object and used for work on a cooperative work region and which are communicably connected to each other. Note that, terminal apparatus 20 may be placed in the same conference room as that of conference support apparatus 10, or may be placed remotely from conference support apparatus 10. In addition, the number of terminal apparatuses 20 is not limited to a particular number.

Conference support apparatus 10 stores screen transition based on the user operation and manages the flow of the conference in a time-series manner. Specifically, when a user participates in a conference and adds an object of an element of the proceedings to the display region of display section 13 or 23, or operates a displayed object using operation section 12 or 22 of conference support apparatus 10 or terminal apparatus 20, information relating to the screen at this time (hereinafter referred to as "screen information") is stored. In addition, the screen displayed on display section 13 of conference support apparatus 10 is reflected on display section 23 of terminal apparatus 20.

Here, the object is data to be operated, and is displayed on display section 13 in the form of a text box in which a letter or sign is input, a graphic, a photographic image, or a work region (window) of an application, or the like on display section 13. In the present embodiment, the object is displayed in the form of a simple graphic. In addition, operations of changing the state of an object such as adding (newly creating), moving, editing, resizing (expanding or contracting), deleting, grouping, ungrouping and the like of objects are referred to as "object operation." Such an object operation is performed after atarget object for operation is selected by an object selection operation including a touch operation and an enclosing operation.

Note that, the "grouping" is an operation of assigning a plurality of objects to one group. The objects thus grouped can be collectively moved, and can be simultaneously expanded or contracted. In addition, a touch operation and an enclosing operation can select not only a single object but also a plurality of objects.

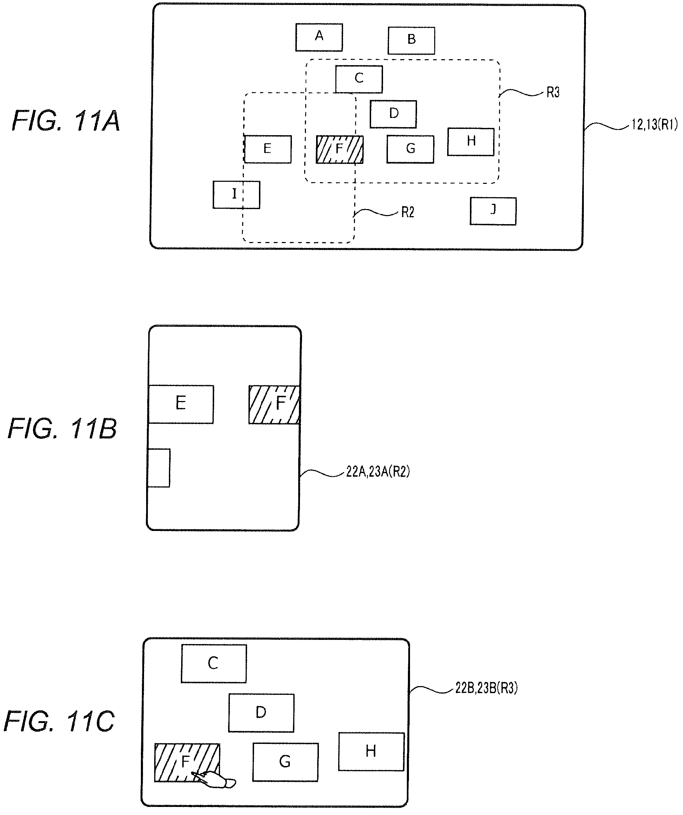

In conference support system 1, conference support apparatus 10 manages a maximum work region (cooperative work region) to be handled by conference support system 1. Individual work region R1 of conference support apparatus 10 is assumed to be the same as the cooperative work region. Moreover, in terminal apparatuses 20A and 20B, the cooperative work region is partially or entirely displayed on display sections 23A and 23B as individual work regions R2 and R3, and work is to be done in individual work regions R2 and R3 (see FIGS. 11A to 11C).

In FIG. 1, display section 13 of conference support apparatus 10 is sectioned into main screen MD on which objects are displayed, and sub-screen SD on which a tree structure diagram (hereinafter referred to as "timeline") for visually recognizing the flow of the conference is displayed. Main screen MD is the individual work region of conference support apparatus 10. It is possible to adopt a configuration in which main screen MD is normally displayed, and the sub-screen is displayed as necessary. In addition, main screen MD and sub-screen SD may be switched to display sub-screen SD on the entirety of the display region. Here, an assumption is made that main screen MD and sub-screen SD are always displayed and are variable in size in accordance with the user operation.

In FIG. 1, eight objects, OB1 to OB8, are created on main screen MD, and objects OB1 to OB3, and objects OB4 to OB6 are formed into two groups (GR1 and GR2). Timeline TL of a case where the discussion is branched at an arbitrary time point is displayed on sub-screen SD. When the discussion is branched, multiple conclusions are obtained.

The user performs an object operation on main screen MD, and a timeline operation on sub-screen SD. The timeline operation refers to an operation performed utilizing timeline TL, and includes an operation of moving marker M, and a branching operation of branching a discussion. For example, the user can reproduce a screen at an arbitrary time point on main screen MD by moving marker M on timeline TL.

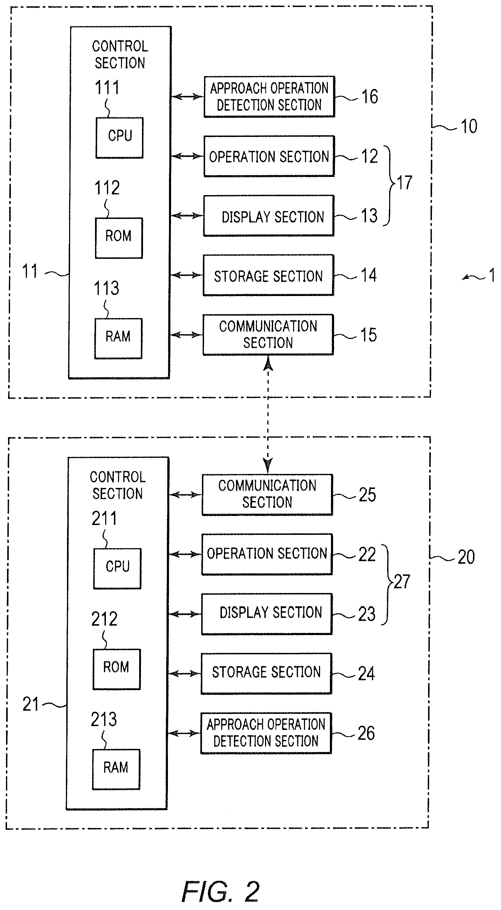

FIG. 2 illustrates an exemplary hardware configuration of conference support system 1.

As illustrated in FIG. 2, conference support apparatus 10 (electronic whiteboard) includes control section 11, operation section 12, display section 13, storage section 14, communication section 15 and approach-operation detection section 16, for example. The blocks are electrically connected through a bus line. When control section 11 executes a conference support program described hereinafter, a conference support method of the present embodiment is achieved.

Control section 11 includes central processing unit (CPU) 111, such as a microprocessor, serving as a computing/controlling apparatus, read only memory (ROM) 112 and random access memory (RAM) 113 serving as a main storage apparatus. ROM 112 stores therein basic setting data and a basic program so called basic input output system (BIOS). CPU 111 reads out a program suited for processing contents from ROM 112 or storage section 14, deploys the program in RAM 113, and controls each block in cooperation with the deployed program.

Operation section 12 and display section 13 are composed of a flat panel display provided with a touch panel, for example. Various kinds of known devices such as liquid crystal displays, organic EL displays, and electronic paper displays having a memory feature are adaptable as the flat panel display. Hereinafter, a component element that serves as operation section 12 and display section 13 like a flat panel display is referred to as "operation display section 17."

Operation section 12 receives handwritten input, an object operation and a timeline operation as well as a touch operation and an enclosing operation (to be described, hereinafter) performed by users and outputs a signal in accordance with the received operation to control section 11. Display section 13 displays various kinds of information on main screen MD and sub-screen SD in accordance with the display control information input from control section 11. Note that, hereinafter, a description will be given based on an assumption that users mainly use fingers to perform the operations, but the users may perform the operations using a part of body other than fingers or a contact member such as a stylus, and the same applies to each terminal apparatus. In addition, an input device such as a mouse or keyboard may be provided as operation section 12.

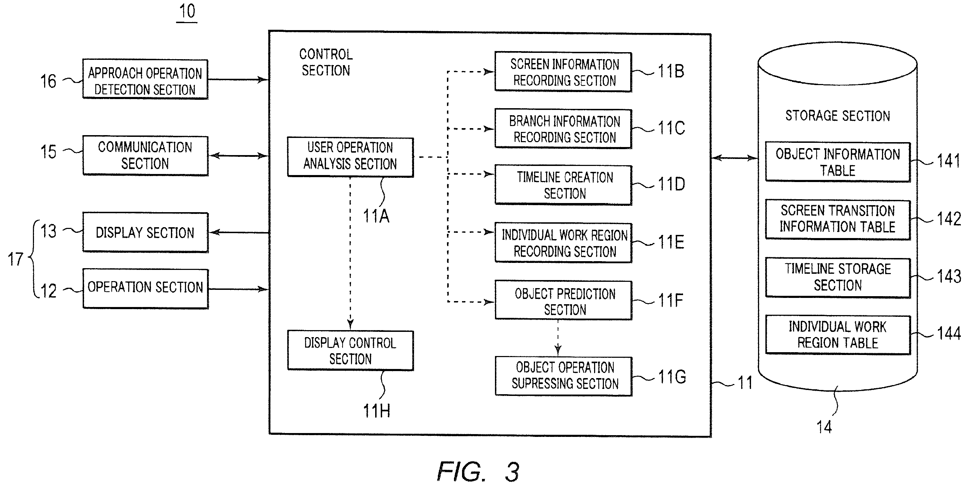

Storage section 14 is, for example, an auxiliary storage such as a hard disk drive (HDD), a solid state drive (SSD), or a secure digital (SD) card and stores therein a conference support program and information relating to a screen, for example. Storage section 14 includes object information table 141, screen transition information table 142, timeline storage section 143, and individual work region table 144, for example (see FIG. 3).

Communication section 15 is, for example, a communication interface such as a network interface card (NIC), a modulator-demodulator (MODEM), or a universal serial bus (USB). Control section 11 transmits and receives various kinds of information to and from terminal apparatus 20 connected to a network such as a wired/wireless LAN through communication section 15. Communication section 15 may be composed of a near field wireless communication interface such as near field communication (NFC) or Bluetooth (registered trademark), for example.

Approach-operation detection section 16 is a sensor configured to detect a finger position of the user with respect to operation display section 17. Approach-operation detection section 16 acquires x and y coordinates corresponding to a finger position of the user that is projected onto operation display section 17 (display section 13), and distance z from the tip of the finger to operation display section 17 (display section). Whether the user intends to select an object by touch operation can be determined based on three dimensional coordinates (x, y, and z) of the finger of the user. Kinect (registered trademark) may be applied to approach-operation detection section 16. Kinect measures a distance to a real object by irradiating the real object with an infrared special pattern using an infrared projector, for example, to capture a distorted pattern due to the real object using an infrared camera (depth sensor), and analyzing the captured pattern.

Terminal apparatus 20 includes control section 21, operation section 22, display section 23, storage section 24, communication section 25, and approach-operation detection section 26, for example. A component element serving as operation section 22 and display section 23 is referred to as "operation display section 27." The configurations of the blocks are substantially the same as those of blocks 11 to 17 of conference support apparatus 10, so that the description will not be repeated.

Control section 21 of terminal apparatus 20 transmits operation information (object operation or timeline operation) input from operation section 22 to conference support apparatus 10 through communication section 25 when a predetermined transmission operation is performed. The term "predetermined transmission operation" used refers to an operation of a transmission key displayed on display section 23 or a flick operation on operation display section 27, for example. Control section 21 receives, via communication section 25, display control information transmitted from conference support apparatus 10, and causes display section 23 to display the information.

In addition, control section 21 always transmits approach-operation information (three dimensional information on finger) acquired by approach-operation detection section 26 to conference support apparatus 10 via communication section 25.

In a case where conference support apparatus 10, terminal apparatuses 20A and 20B in conference system 1 are placed at different locations, it is difficult to know behavior of the other users. Accordingly, a conflicting operation easily occurs in this case. In this embodiment, the target object for operation, which is a target for the object operation, is predicted based on the behavior of the user with conference support apparatus 10 or terminal apparatus 20A or 20B. For example, the occurrence of a conflicting operation is avoided by allowing conference support apparatus 10 and terminal apparatus 20B to know the predicted target object on terminal apparatus 20A.

FIG. 3 is a functional block diagram illustrating the functions of control section 11 of conference support apparatus 10.

As illustrated in FIG. 3, control section 11 serves as user operation analysis section 11A, screen information recording section 11B, branch information recording section 11C, timeline creation section 11 D, individual work region recording section 11E, object prediction section 11 F, object operation suppressing section 11G, and display control section 11 H. Some or all of the functional parts may be configured by a dedicated hardware.

User operation analysis section 11A analyzes operation information input from operation section 12 or communication section 15, and identifies the operation performed by the user. Screen information recording section 11B, branch information recording section 11C, timeline creation section 11D, individual work region recording section 11E, object prediction section 11F, and display control section 11H execute predetermined processing preliminarily associated with the contents of operations (e.g., enlarging the object by pinching out or the like), based on the user operation identified by user operation analysis section 11A.

The term "user operation" used herein includes an operation to be performed by the user using operation section 17 (finger approaching operation with respect to operation display section 17) in addition to the operation actually performed by the user using operation section 12. More specifically, user operation analysis section 11A can determine whether an enclosing operation is performed, based on a finger slide operation (operation to touch the screen with a finger first and slide the finger on the screen) on operation display section 17. In addition, user operation analysis section 11A can determine whether a touch operation is performed, based on a finger approach operation with respect to operation display section 17, which is detected by approach operation detection section 16 or 26.

Screen information recording section 11B records the flow of a conference (screen transition) based on the object operation by the user in storage section 14 as screen information. The screen information is information representing elements of a screen and the time when these elements are created and changed. The screen information includes object information for individually managing operations with respect to objects or groups, and screen transition information for managing the flow of a conference in a time-series manner. The object information is stored in object information table 141 of storage section 14, and the screen transition information is stored in screen transition information table 142 of storage section 14.

Branch information recording section 11C records branch information in screen transition information table 142 based on a branching operation (included in the timeline operation) performed by the user. The branching operation is an operation of generating a branch in timeline TL, and is, for example, an object operation performed on main screen MD at an arbitrary time point displayed by moving marker M on timeline TL, and an operation of requesting creation of a branch on timeline TL (for example, an operation of selecting "create branch" from a context menu that is displayed in response to a press-and-hold operation at an arbitrary time point on timeline TL). Alternatively, a predetermined gesture operation on timeline TL may be assigned as the branching operation.

Timeline creation section 11 D refers to information of screen transition information table 142, and creates timeline TL. When branch information to be described hereinafter is recorded in screen transition information table 142, timeline TL having a branched structure is created. The information on timeline TL thus created is stored in timeline storage section 143 of storage section 14, for example. Timeline TL may include thumbnails of representative screens (for example, screens representing a conclusion and a branch point), and thumbnails of newly created objects. For example, timeline creation section 11D creates and updates timeline TL at predetermined time intervals or in response to an object operation by the user. Timeline TL may be formed by conversion from the time information to the time axis length and displayed in a size fit to sub-screen SD or may be displayed such that its entirety can be viewed by scrolling on sub-screen SD.

Individual work region recording section 11E records information on the respective individual work regions of conference support apparatus 10 and terminal apparatuses 20A and 20B in individual work region table 144 of storage section 14. The information on the individual work regions include information indicating the position and size of the individual work region in the cooperative work region as well as information on an object included in the individual work region. The individual work region management section is composed of individual work region recording section 11E and individual work region table 144.

Object prediction section 11F predicts a target object for operation that is a target for an object operation in each of the individual work regions based on the result of analysis of user operation analysis section 11A. Object prediction section 11F predicts, when an enclosing operation, for example, is performed, an object that is a target for the enclosing operation based on a trajectory of a slide operation or the like. In addition, object prediction section 11F predicts, when a touch operation, for example, is performed, an object that is a target for the touch operation based on spatial coordinates of a finger of the user (particularly, x and y coordinates).

Object operation suppressing section 11G suppresses an operation of a predicted object in a specific terminal apparatus that includes an object predicted as a target object for operation by object prediction section 11F (hereinafter, referred to as "predicted object") in the individual work region. For example, object operation suppressing section 11 G notifies the specific terminal apparatus including the predicted object in the individual work region that this predicted object may become a target object for operation.

Display control section 11 H generates display control information (screen data) for causing display section 13 to display a screen based on the user operation and causes display section 13 to perform a display operation based on the screen data, or transmits the screen data to terminal apparatus 20 through communication section 15, thereby causing display section 23 of terminal apparatus 20 to perform a display operation. When generating display control information, display control section 11 H acquires required information from storage section 14. The display control information includes screen display control information for displaying a screen in which the object operation is reflected, and timeline display control information for displaying timeline TL created by timeline creation section 11D. When an enclosing operation is performed on conference support apparatus 10 or terminal apparatus 20A or 20B, for example, display control section 11H updates a trajectory of the enclosing operation as needed and causes display section 12 or 23 to display the trajectory.

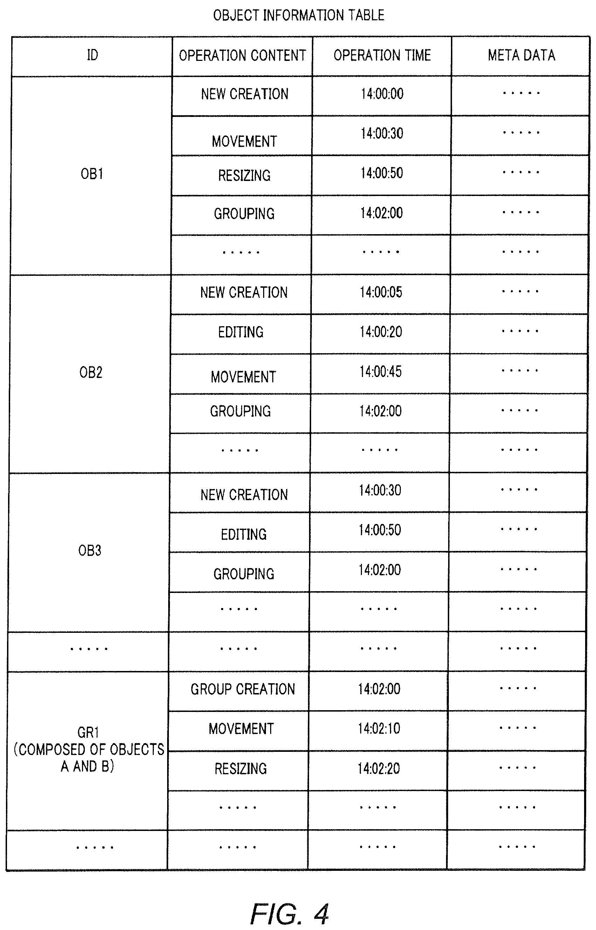

FIG. 4 illustrates an example of object information table 141. As illustrated in FIG. 4, object information table 141 includes information including "object ID," "operation content," "operation time," and "meta data."

The "object ID" is identification information that is given to each object when an object or a group is newly created. The "operation content" is information representing an operation performed on an object or a group. The "operation content" of an object includes new creation, movement, editing, resizing, deletion, grouping, ungrouping and the like, for example. The "operation content" of a group includes group creation, movement, editing, resizing, ungrouping and the like, for example.

The "operation time" is information representing the time at which an object operation is executed. The "meta data" is detailed information on an object or a group. The "meta data" of an object includes the image information, text information, position information (coordinates) and size of the object, for example. The "meta data" of a group includes the image information of the group region, position information (coordinates), size of the group region, and object IDs of objects of the group, for example. The "object ID," "operation content," "operation time," and "meta data" are stored in storage section 14 by screen information recording section 11B.

According to FIG. 4, for example, an object having an ID of "OB1" is an object which was newly created at 14:00:00, moved at 14:00:30, resized at 14:00:50, and grouped at 14:02:00.

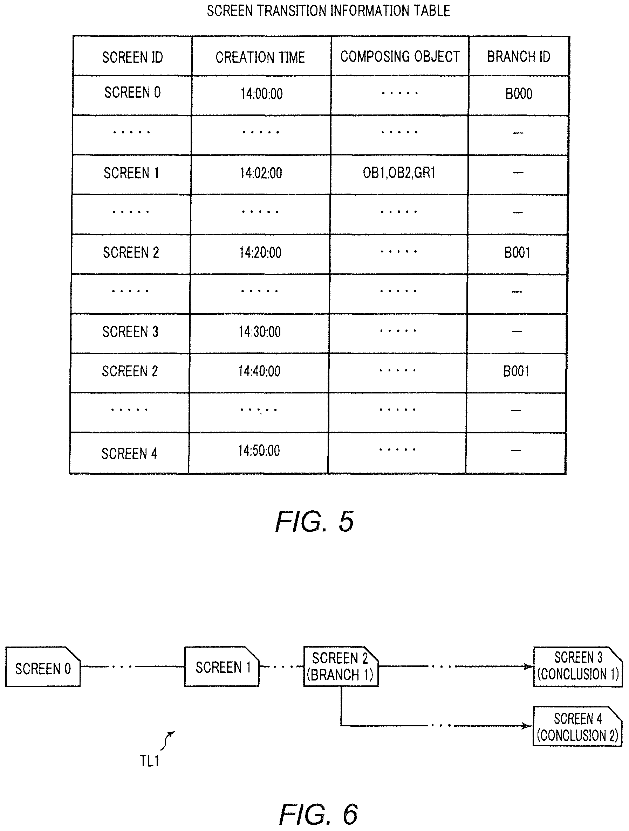

FIG. 5 illustrates an example of screen transition information table 142. FIG. 5 illustrates a screen transition information table of a case where the screen starts from screen 0 and reaches screen 3 (conclusion 1) via screens 1 and 2 and then branches at screen 2 (branch 1) and reaches screen 4 (conclusion 2). Specifically, when a conference proceeds as timeline TL1 illustrated in FIG. 6, the screen transition information table illustrated in FIG. 5 is obtained. In other words, timeline TL1 illustrated in FIG. 6 is created based on the screen transition information table illustrated in FIG. 5.

As described above, adding data in a time series manner every time an object is added or changed makes the data configuration simple and enables easier recognition of screen transition along time course. Note that, in FIG. 6 screens 0 to 4 are illustrated as representative screens and the other screens are omitted. In addition, the numbers "0" to "4" are assigned to screens 0 to 4 in FIG. 6 for convenience to facilitate understanding. In practice, every time an object is added or changed on the screen, a number generated based on the data and time of the addition or change, or a unique serial number is assigned in order.

As illustrated in FIG. 5, a screen transition information table includes information on "screen ID," "creation time," "composing object," and "branch ID." The "screen ID" is identification information given to each screen when an object operation is performed. The "creation time" is information representing the time at which the screen is created, i.e., the time at which an object operation is performed. The "composing object" is information representing a configuration of main screen MD when an object operation is performed, e.g., the object ID of an object included in main screen MD. The "screen ID," "creation time," and "composing object" are recorded in storage section 14 by screen information recording section 11B.

The "branch ID" is identification information that is given when a branching operation is performed, and the same identification information is given to the screen on which the branching operation is performed. The "branch ID" is recorded in storage section 14 by branch information recording section 11C.

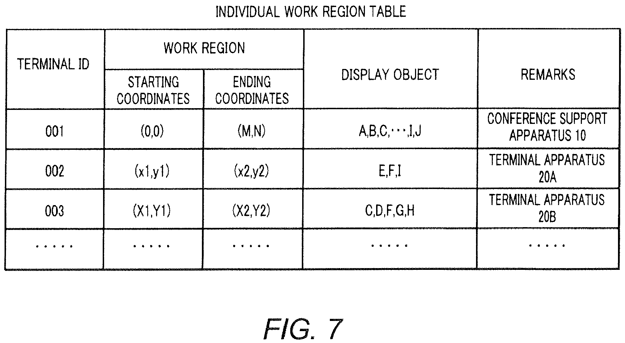

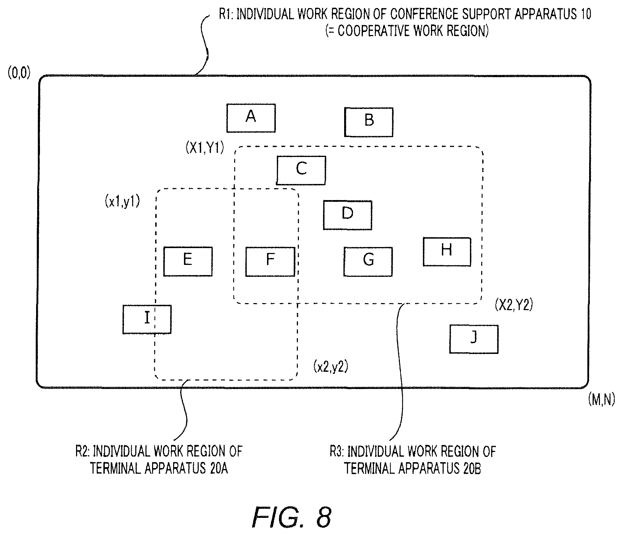

FIG. 7 illustrates an example of individual work region table 144. FIG. 8 illustrates an example of how objects are disposed in an individual work region. In FIG. 8, objects A to J are disposed in individual work region R1 (same as cooperative work region) of conference support apparatus 10, and objects E, F, and I are disposed in individual work region R2 of terminal apparatus 20A. In addition, objects C, D, F, G, and H are disposed in individual work region R3 of terminal apparatus 20B in FIG. 8. FIG. 7 illustrates individual work region table 144 of a case where objects A to J are disposed in cooperative work region R1, and individual work regions R2 and R3 are set as in FIG. 8.

As illustrated in FIG. 7, individual work region table 144 includes information on "terminal ID," "work region," and "display object." The "terminal ID" is identification information that is given to a terminal composing conference support system 1 (terminal including conference support apparatus 10). The "work region" is information indicating the position and size of each of the individual work regions, and starting point coordinates (upper left coordinates) and ending coordinates (lower right coordinates) of an individual work region are used in this case. Each work region may be expressed using reference coordinates (e.g., upper left coordinates) and height and width of the individual work region. The "display object" is information indicating an object displayed in each of the individual work regions and is extracted based on work region information and object position information included in "meta data" of object information table 141 (see FIG. 4).

When a display region is changed by scrolling operation or the like, or an object is added or deleted in display section 23A or 23B of terminal apparatuses 20A or 20B, information on "work region" and "display object" is updated.

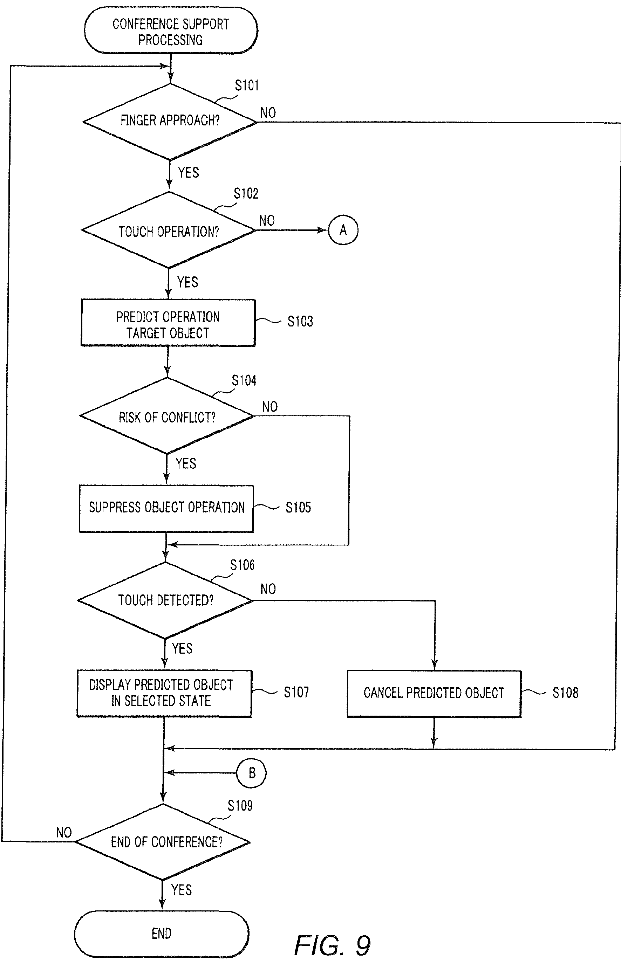

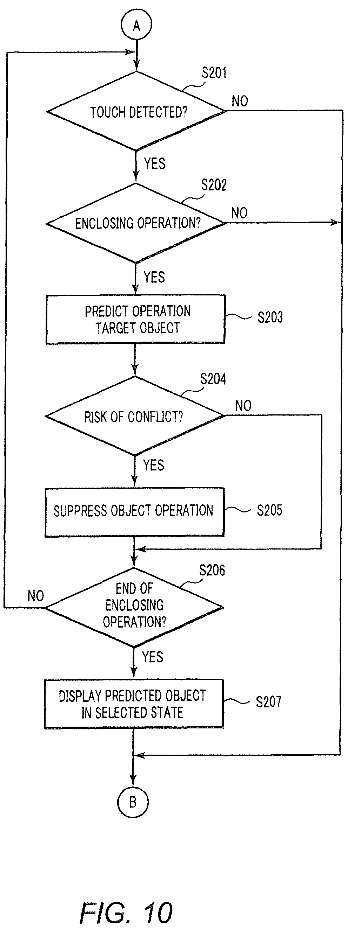

FIG. 9 and FIG. 10 are each a flowchart of exemplary conference support processing executed by control section 11. This processing is performed when CPU 111 executes a conference support program stored in ROM 112 as the power supply of conference support apparatus 1 is turned on.

At step S101, control section 11 determines whether a finger of the user approaches operation display section 17 of conference support apparatus 100 or operation display section 27 of terminal apparatus 20 (as processing performed by user operation analysis section 11 A). When the finger of the user approaches operation display section 17 or 27 ("YES" at step S101), the processing moves to step S102. When the finger of the user approaches neither operation display section 17 nor 27, the processing moves to step S109. When the finger of the user approaches operation display section 17 or 27, it can be predicted that the user is about to execute an operation on the terminal apparatus.

Control section 11 determines that the finger has approached when the distance from operation display section 17 or 27 to the finger decreases to a predetermined value (e.g., 3 cm) or less, based on z coordinates of the finger that is included in the approach operation information obtained by approach operation detection section 16 or 26, for example.

At step S102, control section 11 determines whether the predicted user operation is a touch operation to select a target object for operation (processing performed as user operation analysis section 11A). When the predicted user operation is a touch operation ("YES" at step S102), the processing moves to step S103. When the predicted user operation is not a touch operation ("NO" at step S102), the processing moves to step S201 in FIG. 10.

Control section 11 compares the x and y coordinates included in the approach operation information with the position information and sizes of all objects (included in "meta data" of object information table (see FIG. 4)) and determines that the predicted user operation is a touch operation when the x and y coordinates of the finger are within a region of any of the objects.

At step S103, control section 11 predicts a target object for operation selectable by touch operation (processing performed as object prediction section 11F). In the processing of step S102, an object including the x and y coordinates of the finger within the object region becomes the target object.

At step S104, control section 11 determines whether the predicted target object for operation (predicted target object) is operable by another terminal apparatus (an terminal apparatus other than the terminal apparatus for which finger approach is detected), i.e., determines whether there is a risk of conflict (processing performed as object operation suppressing section 11G). If there is a risk of conflict ("YES" at step S104), the processing moves to step S105. When there is no risk of conflict ("NO" at step S104), the processing moves to step S106.

Control section 11 determines, with reference to the "display object'" of individual work region table 144 (see FIG. 7), for example, that there is a risk of conflict when the display object information of another terminal apparatus includes the predicted object. For example, when a touch operation with respect to object F is about to be performed in individual work region R3 of terminal apparatus 20B as illustrated in FIG. 11C, it is determined that there is a risk of conflict because predicted object F is in individual work region R1 of conference support apparatus 10 and individual work region R2 of terminal apparatus 20A (see FIGS. 11A and 11B).

At step S105, control section 11 suppresses the operation of the predicted object (object F in FIGS. 11A to 11C) in a terminal apparatus that has a risk of conflict, i.e., a specific terminal apparatus including the predicted object (conference support apparatus 10 and terminal apparatus 20A in FIGS. 11A to 11C). Hereinafter, the state in which the processing to suppress the operation of a predicted object is referred to as "operation restricted state."

Control section 11 notifies a terminal apparatus having a risk of conflict that the individual work region of this terminal apparatus includes the predicted object. This notification indicating that the individual work region includes the predicted object is made by changing the way how the object is displayed (e.g., changing the background color or frame color) or by displaying an alert (e.g., displaying a message or causing the object to blink). Accordingly, it is made possible to call for attention from users to note that the users should not operate the predicted object. In FIGS. 11A to 11C, the attention of users is drawn by changing the background color of the predicted object F to make the way how the predicted object is displayed different from the way how a non-target object for operation is displayed.

In addition, control section 11 restricts the object operation of the predicted object in a terminal apparatus having a risk of conflict, for example. In this case, it is preferable to prohibit an operation of changing the coordinates of the predicted object (e.g., moving the object, and performing enlargement/contraction, rotation, deletion, undo and redo) but to allow for an operation of editing the contents of the predicted object (e.g., changing the background color or written contents).

In addition, as the prediction accuracy for target object for operations improves, the object operation of the predicted object may be restricted instead of the notification indicating that the individual work region includes the predicted object or in addition to this notification.

At step S106, control section 11 determines whether a touch operation is performed within a predetermined time. When a touch operation is actually detected within the predetermined time (YES at step S106), the processing moves to step S107. When no touch operation is detected within the predetermined time (NO at step S106), the processing moves to step S108.

At step S107, control section 11 displays the object selected by the touch operation in a selected state. The selected object becomes the target for the object operation to be performed thereafter. For the selected target object, an object operation on another terminal apparatus is no longer performed. Note that, the selected state of the object is canceled when a selection cancelling operation (e.g., an operation to touch a region where no object exists) is performed or when a predetermined time elapses. There is a case where an object operation (moving an object or performing enlargement/contraction) is performed subsequently from a touch operation.

At step S108, control section 11 cancels the operation restricted state of the predicted object. In other words, when the predicted object is not actually selected as the target object, in order for another terminal apparatus to freely operate this predicted object, the operation restricted state is cancelled immediately.

When determining that the predicted user operation is not a touch operation at step S102, control section 11 determines whether a region other than the object is touched within a predetermined time (processing performed as user operation analysis section 11 A). When a region other than the object is touched within the predetermined time ("YES" at step S201), the processing moves to step S202. When no region other than the object is touched within the predetermined time ("NO" at step S201), i.e., the finger approaches operation display section 17 or 27, but does not touch operation display section 17 or 27 actually, the processing moves to step S109 in FIG. 9.

At step S202, control section 11 determines whether the predicted user operation is an enclosing operation of selecting the target object for operation (processing performed as user analysis section 11A). When the predicted user operation is an enclosing operation ("YES" at step S202), the processing moves to step S203. When the predicted user operation is not an enclosing operation ("NO" at step S202), i.e., when the predicted user operation is an operation of simply touching a region other than the object, processing moves to step S109 of FIG. 9. When the state where a region other than the object is touched continues, control section 11 determines that the predicted user operation is an enclosing operation, for example.

At step S203, control section 11 predicts the target object selectable by an enclosing operation (processing performed as object prediction section 11 F). Control section 11 predicts the target object based on a finger slide operation on operation display section 17 or 23 (operation section 22), for example. The finger slide operation includes, for example, the start point of the enclosing operation (the point where the finger touches very first time), acceleration, trajectory from the start point to the end point (the point where the finger touches currently) (free curve), and the curvature of the trajectory.

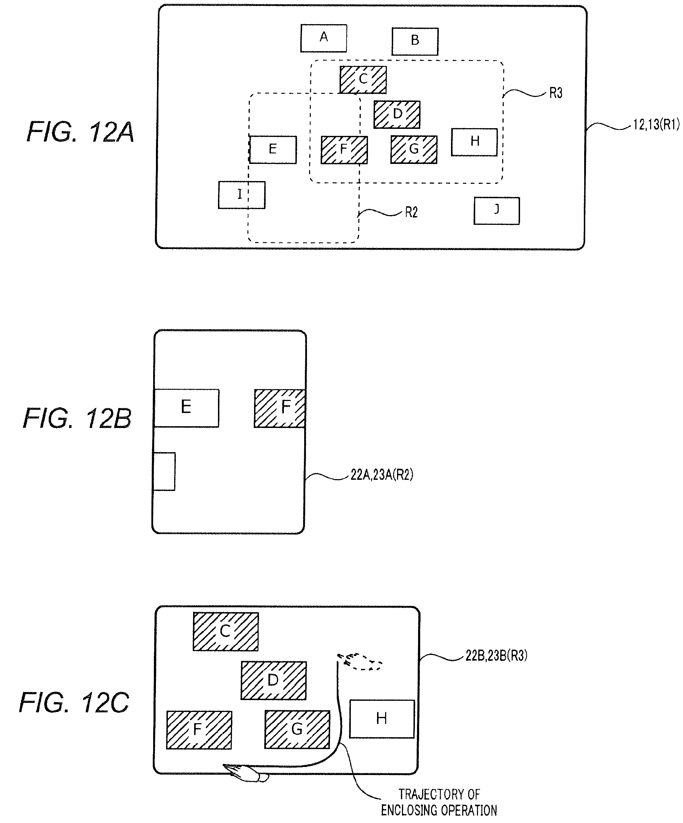

For example, let us consider a case where an enclosing operation is performed in which the operation starts from one side of an object group including a plurality of objects C, D, F, and G arranged in a flying geese pattern among the objects within the work region as illustrated in FIG. 12C, then passes between this object group and object H positioned next to the group and passes below the object group in individual work region R3 of terminal apparatus 20B. In this case, objects (objects C, D, F and G) excluding an object that will be determinably out of the region surrounded by the enclosing trajectory and a line connecting the start point and the end point (object H in this case) are predicted as the target object for operations. Note that, the enclosing operation may be performed by generating a predetermined graphic (e.g., rectangular or circular frame) and moving or enlarging/contracting the graphic so that the graphic includes the object therein.

The processing of steps S204 and S205 is similar to the processing of steps S104 and S105 of FIG. 9. In other words, at step S204, control section 11 determines whether the predicted target object for operation (predicted target object) is operable by another terminal apparatus, i.e., whether there is a risk of conflict (processing performed as object operation suppressing section 11 G). When there is a risk of conflict ("YES" at step S204), the processing moves to step S205. When there is no risk of conflict ("NO" at step S204), the processing moves to step S206.

Control section 11 determines, with reference to the display object information of individual work region table 144 (see FIG. 7), for example, that there is a risk of conflict when the display object information of another terminal apparatus includes the predicted object. For example, when an enclosing operation as illustrated in FIG. 12C is performed in individual work region R3 of terminal apparatus 20B, it is determined that there is a risk of conflict because individual work region R1 of conference support apparatus 10 includes predicted objects C, D, F, and G (see FIG. 12A) and individual work region R2 of terminal apparatus 20A includes predicted object F (see FIG. 12B).

At step S205, control section 11 suppresses the operation of the predicted object in a terminal apparatus having a risk of conflict, i.e., a specific terminal apparatus including the predicted object (conference support apparatus 10 and terminal apparatus 20A) (processing performed as object operation suppressing section 11G). In FIGS. 12A to 12C, the background colors of predicted objects C, D, F and G are changed and the way how the predicted objects are displayed is made different from those of the objects other than the target object for operation to draw attention from the users.

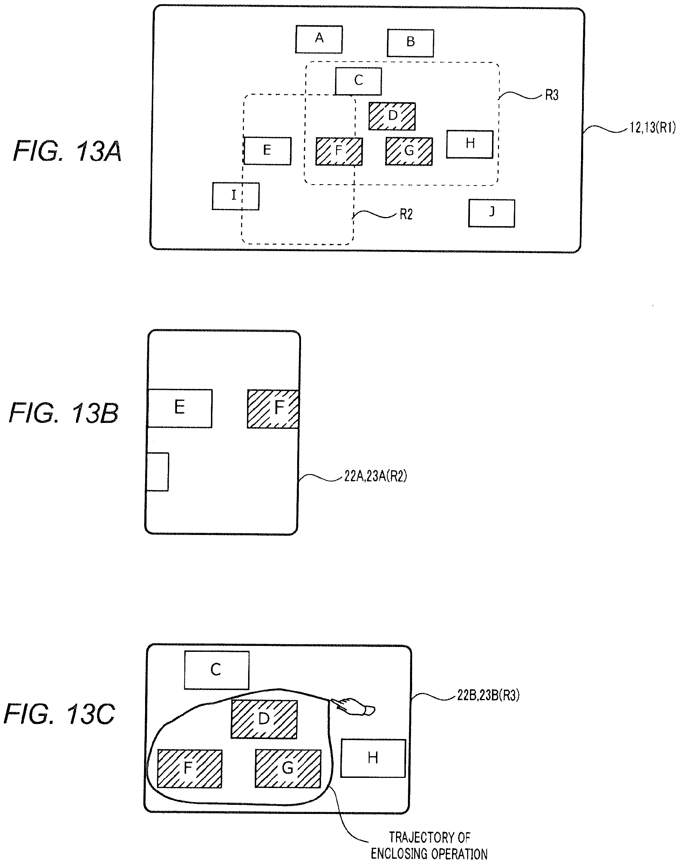

At step S206, control section 11 determines whether the enclosing operation is completed (processing performed as user operation analysis section 11A). When the enclosing operation is completed ("NO" at step S206), processing moves to step S207. When the enclosing operation is not completed ("NO" at step S206), processing moves to step S201, and the enclosing operation and the prediction of the enclosing operation are continued. Control section 11 determines that the enclosing operation is completed, when the end point of the enclosing operation returns to the start point and the enclosing operation specifies a closed region as illustrated in FIG. 13.

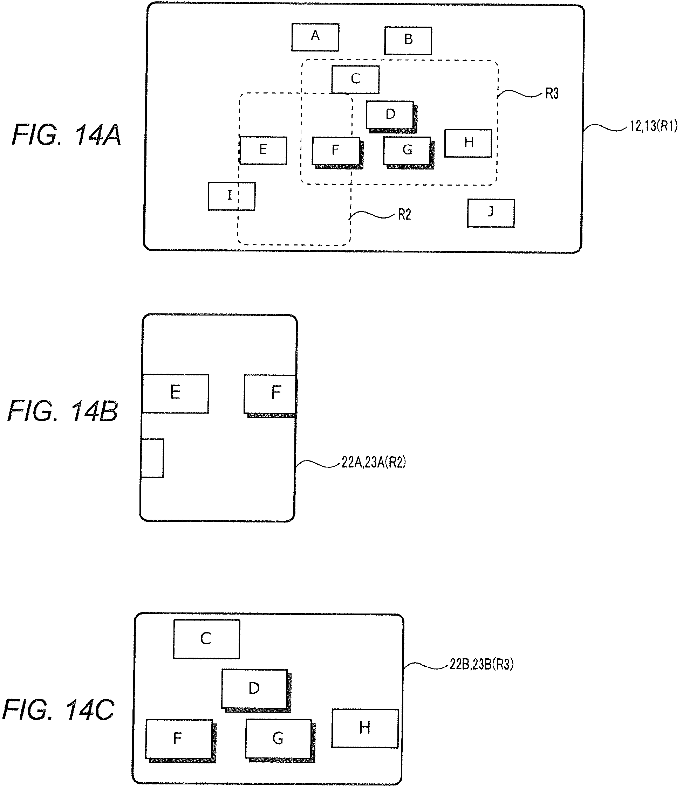

At step S207, control section 11 displays the object in the specified region surrounded by the enclosing operation in a selected state (see FIGS. 14A to 14C). The selected object becomes the target for the object operation to be performed thereafter. Note that, the selected state of the object is canceled when a selection canceling operation (e.g., an operation to touch a region where no object exists) is performed or when a predetermined time elapses.

When the finger leaves from operation display section 17 or 27 before completion of the enclosing operation, it is determined "NO" at step S201, and the processing moves to step S109 in FIG. 9. In this case, the operation restricted state of the predicted object is cancelled. Note that, the region surrounded by the moving trajectory when the finger leaves from operation display section 17 or 27 and the line connecting the end point and the start point may be determined as the specified region by the enclosing operation, and the predicted object at this time (objects C, D, F, and G in FIGS. 12A to 12C) may be displayed in the selected state.

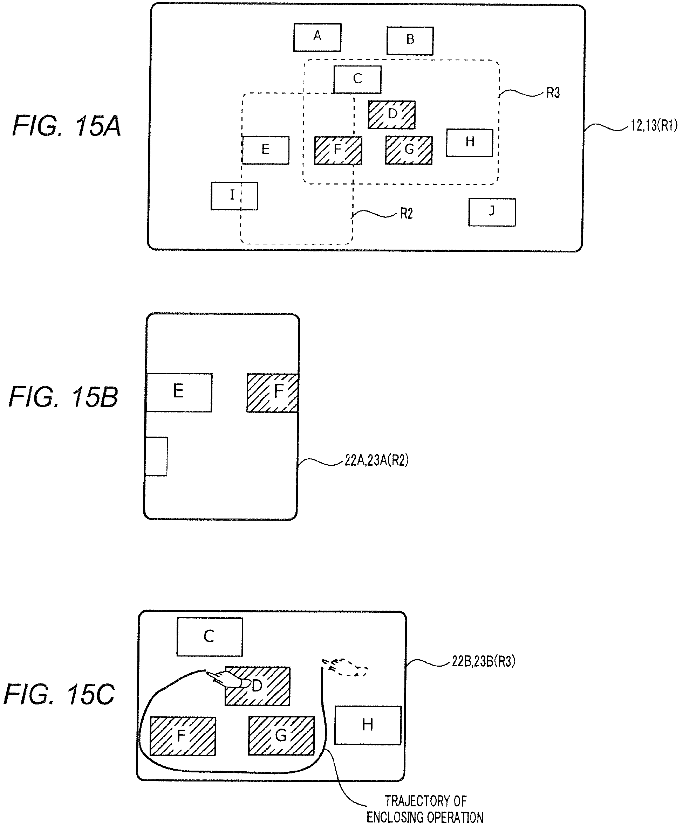

When the enclosing operation is not completed, the processing of steps S201 to S206 is repeated, and every time the enclosing operation proceeds, the predicted object is updated. For example, the enclosing operation in individual work region R3 of terminal apparatus 20B proceeds from the state illustrated in FIG. 12C to the state illustrated in FIG. 15C, object C is excluded from the predicted objects. Updating the predicted objects as the prediction accuracy improves can prevent the object operation from being restricted more than necessary, thereby improving the usability.

Object operation suppressing section 11 G suppresses the operation of the existing object and takes no part in creating a new object. For this reason, it is expected that a new object is created in a specified region that may be surrounded by the enclosing operation while the enclosing operation is in progress. In this case, the added new object may be or may not be included in the predicted objects.

At step S109 of FIG. 9, control section 11 determines whether the conference has ended. When the conference has ended ("YES" at step S109), the conference support processing ends.

When the conference has not ended ("NO"" at step S109), the processing moves to step S101.

As described above, conference support apparatus 10 includes an individual work region management section (individual work region recoding section 11E and individual work region table 144) configured to manage individual work regions R1, R2, and R3, which become display regions of a plurality of terminal apparatuses, respectively; user operation analysis section 11A configured to analyze the operations performed via operation sections 12 and 22; screen display control section 11 H configured to cause display sections 12 and 22 to display screens on which the object operations in individual work regions R1, R2, and R3 are reflected; object prediction section 11F configured to predict a target object for operation that becomes the target for the object operation, based on the result of analysis of user operation analysis section 11 A; and object operation suppressing section 11 G configured to suppress the operation of the predicted object in a specific terminal apparatus that is a terminal apparatus other than the terminal apparatus on which the object operation by the user is predicted and that includes, in individual work region R1, R2, or R3, the predicted object that has been predicted by object prediction section 11F, among a plurality of terminal apparatuses.

According to conference support apparatus 10, the target object that becomes the target for the object operation performed in a certain terminal apparatus is predicted, and the object operation on another terminal apparatus is restricted based on the prediction. Thus, the occurrence of a conflict operation can be effectively avoided. Accordingly, the efficiency of conferences significantly improves.

While the invention made by the present inventor has been specifically described based on the preferred embodiment, it is not intended to limit the present invention to the above-mentioned preferred embodiment, and the present invention may be further modified within the scope and spirit of the invention defined by the appended claims.

For example, the present invention is applicable to a case where the target object for operation is selected by an object selection operation other than a touch operation or an enclosing operation (e.g., input of an object ID using a keyboard). In this case, an object selection may be predicted based on the object ID that is inputted but not determined.

While control section 11 of conference support apparatus 10 executes the conference support program to achieve the conference support processing in the embodiment, the conference support processing may also be achieved using a hardware circuit. The conference support program may be stored in a non-transitory computer-readable storage medium such as a magnetic disc, an optical disk, and a flash memory so as to be provided to an apparatus (for example, a personal computer) which can be used as the conference support apparatus. Alternatively, the conference support program may be provided by downloading through communication lines such as the Internet.

The embodiment disclosed herein is merely an exemplification and should not be considered as limitative. The scope of the present invention is specified by the following claims, not by the above-mentioned description. It should be understood that various modifications, combinations, sub-combinations and alterations may occur depending on design requirements and other factors in so far as they are within the scope of the appended claims or the equivalents thereof.

Although an embodiment of the present invention has been described and illustrated in detail, it is clearly understood that the same is by way of illustrated and example only and is not to be taken by way of limitation, the scope of the present invention being interpreted by terms of the appended claims.

## Claims

1. A conference support apparatus (10) used in a conference support system (1) in which a plurality of terminal apparatuses (10, 20) configured to perform work on a cooperative operation region are communicably connected to each other, each of the terminal apparatuses including: a display (13, 23) which displays an object; and an operation acceptor (12, 22) which accepts an operation of the object,
the conference support apparatus comprising a controller (11) connected communicably to the display and the operation acceptor, the controller including at least a microprocessor (111), wherein
the controller manages an individual work region that is applicable a display region of each of the plurality of terminal apparatuses,
analyzes an operation performed by a user via the operation acceptor,
causes each of the displays to display a screen in which an object operation in each of the individual work regions is reflected,
predicts a target object for operation based on a result of the analysis, and
suppresses an operation of the predicted target object in a specific terminal apparatus that includes the predicted target object in the individual work region, the specific terminal apparatus being a terminal apparatus other than a terminal apparatus whose object has been predicted as the target object according to the operation thereon, among the plurality of terminal apparatuses.

2. The conference support apparatus according to claim 1, wherein
the operation acceptor is capable of accepting a touch operation and an enclosing operation, wherein
the controller predicts, as the target object, an object selectable by the touch operation or the enclosing operation.

3. The conference support apparatus according to claim 2, wherein
the display and the operation acceptor are included in a flat panel display provided with a touch panel, wherein
the conference support apparatus further comprises a device (16) capable of determining an approach operation of a contact member, wherein
the controller determines whether a touch operation is performed based on the approach operation of the contact member with respect to the flat panel display, and
the controller predicts the target object selectable by the touch operation based on a result of the analysis.

4. The conference support apparatus according to claim 2 or 3, wherein
the display and the operation acceptor are included in a flat panel display provided with a touch panel, wherein
the controller determines whether the enclosing operation is performed based on a slide operation of a contact member on the flat panel display, and
the controller predicts the target object selectable by the enclosing operation based on a result of the analysis.

5. The conference support apparatus according to any one of claims 1 to 4, wherein the controller notifies the specific terminal apparatus that the individual work region of this specific terminal apparatus includes the predicted target object.

6. The conference support apparatus according to any one of claims 1 to 5, wherein the controller restricts an operation of the predicted target object on the specific terminal apparatus.

7. The conference support apparatus according to claim 6, wherein the controller restricts an operation to change a coordinate of the predicted target object.

8. The conference support apparatus according to claim 6 or 7, wherein the controller allows for an operation to edit contents of the predicted target object.

9. A conference support system comprising:
the conference support apparatus according to any one of claims 1 to 8; and
a terminal apparatus having at least one of the display and the operation acceptor, and communicably connected to the conference support apparatus.

10. A conference support program configured to cause a computer of a conference support apparatus to execute processing, the conference support apparatus being used in a conference support system in which a plurality of terminal apparatuses configured to perform work on a cooperative operation region are communicably connected to each other, each of the terminal apparatuses including: a display which displays an object; and an operation acceptor used to operate the object by a user, the processing comprising:
managing an individual work region that is applicable a display region of each of the plurality of terminal apparatuses,
analyzing an operation performed by a user via the operation acceptor,
causing each of the displays to display a screen in which an object operation in each of the individual work regions is reflected,
predicting a target object that is a target for the object operation based on a result of the analysis, and
suppressing an operation of the predicted target object in a specific terminal apparatus that includes the predicted target object in the individual work region, the specific terminal apparatus being a terminal apparatus other than a terminal apparatus whose object has been predicted as the target object according to the operation thereon, among the plurality of terminal apparatuses.

11. The conference support program according to claim 10, wherein
the operation acceptor is capable of accepting a touch operation and an enclosing operation, wherein
the processing further comprises predicting, as the target object, an object selectable by the touch operation or the enclosing operation.

12. The conference support program according to claim 11, wherein
the display and the operation acceptor are included in a flat panel display provided with a touch panel, wherein
the processing further comprises:
determining whether a touch operation is performed based on an approach operation of a contact member with respect to the flat panel display; and
predicting the target object selectable by the touch operation based on a result of the determination.

13. The conference support program according to claim 11 or 12, wherein
the display and the operation acceptor are included in a flat panel display provided with a touch panel, wherein
the processing further comprises:
determining whether the enclosing operation is performed based on a slide operation of a contact member on the flat panel display, and
predicting the target object selectable by the enclosing operation based on a result of the determination.

14. The conference support program according to any one of claims 10 to 13, wherein the processing further comprises notifying the specific terminal apparatus that the individual work region of this specific terminal apparatus includes the predicted target object.

15. A conference support method in a conference support system in which a plurality of terminal apparatuses configured to perform work on a cooperative operation region are communicably connected to each other, each of the terminal apparatuses including: a display which displays an object; and an operation acceptor used to operate the object by a user, the method comprising:
managing an individual work region that is applicable a display region of each of the plurality of terminal apparatuses,
analyzing an operation performed by a user via the operation acceptor,
causing each of the displays to display a screen in which an object operation in each of the individual work regions is reflected,
predicting a target object that is a target for the object operation based on a result of the analysis, and
suppressing an operation of the predicted target object in a specific terminal apparatus that includes the predicted target object in the individual work region, the specific terminal apparatus being a terminal apparatus other than a terminal apparatus whose object has been predicted as the target object according to the operation thereon, among the plurality of terminal apparatuses.
